# EUROPEAN PATENT APPLICATION

(11) **EP 3 567 519 A1**
(43) Date of publication of application: **13.11.2019**
(21) Application number: 18171425.4
(22) Date of filing: 09.05.2018
(51) Int. Cl.: G06K 9/00, G06K 9/62

(54) **METHOD FOR ROAD MARKING RECOGNITION**

(71) Applicant: Continental Automotive GmbH, 30165 Hannover (DE)
(72) Inventor: Kumaresan, Yamunarani, 625515 Uthamapalayam(tk),Theni (Dt) (IN)
(74) Representative: Reuter, Andreas

(57) **Abstract**

A method (100) for road marking recognition is provided wherein cutouts of a plurality of images of a road marking are extracted (110), feature vectors are generated (112, 114, 116), a Linear Discriminant Analysis over the feature vectors is applied (120, 122, 124), and a road marking is classified using a result (132, 134) of the Linear Discriminant Analysis.

## Description

A method for road marking recognition is provided by applying a Linear Discriminant Analysis.

One aspect of autonomous driving is to determine traffic signs and road markings. E.g., when a vehicle approaches a crossing, a lane may be split into several lanes for different directions and each lane may be marked with a sign on the asphalt that indicates which lane to use for which direction. Further examples are stop-lines or even text. The signs and the shape of the signs may differ in several aspects. E.g., they may differ from country to country, they may differ in size and shape, or they may be in better or worse condition. Furthermore, when sensing the sign with, e.g., a camera, the aspect angle may differ depending on the vehicle, the situation or the distance. For detecting the type of road marking or sign, usually the so-called algorithm of Histograms of Oriented Gradients (HOG) is used. The algorithm typically emanates from an input image recorded by a camera and the cutout, which is the sign or marking, is extracted, which is sub-divided into cells wherein each cell contains a matrix of pixels. Neighbored cells may again constitute a block. For each cell, the gradients in x- and y- direction are determined. More precise, the gradients are discretized, so that bins are created, each of which comprises a range of directions. The particular magnitude values of the gradients are summed up for each bin. The values may be interpolated so that the values are distributed into neighbored bins. Further, the local brightness is normalized by generating blocks. Finally, a feature vector is determined from the HOG. The feature vector or descriptor is typically the concatenation of the histogram of all cells or blocks. Thus, the descriptor might be very large. Furthermore, the descriptors can cause confusions on similar types of traffic signs like directional arrows, which have more than 10 variations.

A method for improving traffic sign determination is desired.

According to an aspect of the invention, a method for road marking recognition is provided comprising the steps
- extracting cutouts of a plurality of road marking images,
- generating a feature vector for each of the cutouts,
- applying a Linear Discriminant Analysis over the feature vectors, and
- classifying the road marking images using a result of the Linear Discriminant Analysis.

There may be two phases for the road marking recognition, a training phase and a post-training phase as, e.g., a testing phase. The method described above may be applied in a training phase to a plurality of images of road markings and traffic signs. Throughout the present description, the term road marking includes signs and markings painted onto the road, traffic signs or street signs along the street and the like.

In the training phase the following steps are carried out to get a reduced feature vector and classifier model out of it.

The images of the sign or road marking are cut out so that the outer background is stripped off and the road markings in the different images are nearly equally sized. For each of the resulting cutouts the characteristics or features of the pixels in their context of the surrounding pixels are determined. The features of the pixels are collected in a vector so that feature vectors are obtained representing the features of the corresponding cutout. The plurality of feature vectors, i.e., one per image, are the input for a Linear Discriminant Analysis. A Linear Discriminant Analysis (LDA) finds a linear combination of features so that objects that comprise these features can be categorized into classes or categories, respectively. Therefore, each cutout comprises a linear combination of features that is contained in the feature vector. The linear combinations build clusters wherein a cluster corresponds to a certain road marking. The LDA finds the linear discriminants between the clusters so that a cutout can be related to its corresponding clusters based on its features, or more precisely, the linear combination of its features.

According to an embodiment, the step of generating feature vectors of the cutouts comprises:
- determining a gradient direction feature vector,
- determining a Local Binary Pattern histogram vector of the cutout,
- concatenating the gradient direction feature vector and the Local Binary Pattern histogram vector to a concatenated feature vector; and
- applying the Linear Discriminant Analysis over the concatenated feature vectors.

The feature vector may comprise two parts that are concatenated to a total, concatenated feature vector as explained in more detail in the following. The road marking is extracted by a tightly bound cutout of an image. The cutout is re-sized and normalized so that is comprises a pre-determined number of pixels. Then, the gradient directions of each pixel are determined indicating the direction of change of, e.g., the brightness in respect to the neighboring pixels. A first feature vector is created comprising each of these gradients. Independently, a second feature vector is created comprising the Local Binary Pattern histogram, i.e., texture of the cutout, wherein the Local Binary Pattern serves as a measure for a transition from the background, e.g. the grey asphalt, to the, e.g., white color of the sign or vice versa. The two feature vectors are concatenated in order to obtain the total feature vector. These steps are repeated for each training image in the training phase. The concatenated feature vectors of all cutouts are input to the Linear Discriminant Analysis, which then determines the discriminants.

According to an embodiment, the step of applying a Linear Discriminant Analysis over the concatenated feature vectors comprises determining the eigenvectors to the eigenvalues calculated from the product of the inverse of a matrix comprising the scatterings within a category and a matrix comprising the scatterings between categories according to the Linear Discrimination Analysis. The eigenvectors provide the coefficients for the discriminants for discriminating the categories of road traffic signs. These eigenvectors are stored in a memory and can be used both, in the training phase and in the post-training phase or testing phase described further below.

According to an embodiment, the step of classifying road marking images comprises for each image multiplying the concatenated feature vector with the eigenvectors, thereby generating a reduced feature vector. Thus, in this step, the discriminants are applied to the features of the cutouts, resulting in a reduced feature vector that is of size of the number of categories, which is significantly lower than the number of features in the concatenated feature vector. The eigenvectors to be multiplied are arranged in an eigenvector matrix. The reduced feature vector utilizes the information of the maximum inter class variances and minimum intra class variances comprise by the eigenvectors and indicates the affiliation to a class, so that a respective road marking categorization can be performed using a machine learning technique. Therefore, once the training is finished, any new image comprising an unknown road marking can be categorized using the reduced feature vector.

According to an embodiment, the step of classifying road marking images further comprises for each image applying a machine-learning algorithm in order to obtain a classifier model and classifying images according to the classifier model. The machine-learning algorithm may comprise, e.g., support vector machines (SVM), neuronal networks as, e.g. extreme learning machines or other machine-learning techniques. I.e., the reduced feature vectors of all the training images are learnt with a machine learning technique to get the classifier model, which is also further stored in a memory. As explained earlier, the feature, which is reduced in length due to the LDA, induces the maximum gap in interclass variance, which aids in easier categorization of, e.g., similar appearing road marking directional arrow types. It also induces minimum gap in the intraclass variance, which improves the true positive recognition rate of each of the sign types.

At the end of training phase, the eigenvectors and the classifier models are saved in a memory, which can be used in the categorization of new images, whose sign type is not known a priori.

In the post-training or testing phase the cutout, whose sign class is not yet known is subjected to the following steps to categorize the respective sign type.

According to an aspect, a method for classifying a road marking is provided, comprising the steps
- extracting a cutout of an image of a road marking,
- generating a feature vector,
- multiplying the feature vector (216) with a pre-determined eigenvector (124) of a Linear Discriminant Analysis-Matrix to obtain a reduced feature vector (234), and
- classifying (140, 238, 240) a road marking using the reduced feature vector.

According to an embodiment, the step of generating a feature vector of the cutout comprises:
- determining a gradient direction feature vector,
- determining a Local Binary Pattern histogram vector of the cutout,
- concatenating the gradient direction feature vector and the Local Binary Pattern histogram vector to a concatenated feature vector.

The method according to this embodiment uses the concatenated feature vector of the cutout that shall be classified and eigenvectors that have, e.g., been determined according to the method described further above, where the LDA is applied. The eigenvectors of that phase are therefore, e.g., the eigenvectors of the training phase, which are stored in a memory or, e.g., provided by a remote server.

According to an embodiment, the step of classifying a road marking comprises applying a pre-determined classifier model.

The reduced feature vector is sent to, e.g., the SVM classifier, which utilizes the classifier model that has, e.g., been determined in the training phase described above and which is stored in a memory. The SVM classifier therein uses the model to recognize the respective sign type.

According to an aspect, a system for road marking recognition is provided that comprises a processing device, and the processing device is configured to carry out the method for road marking recognition described above. The system therefore is a system that is configured to extract cutouts of a plurality of images of a road marking, generate feature vectors, apply a Linear Discriminant Analysis over the feature vectors, and to classify a road marking using a result of the Linear Discriminant Analysis . The system may be used, e.g., in a training phase for classifying road markings.

According to an aspect, a system for road marking recognition is provided that comprises a processing device, and the processing device is configured to carry out the method for classifying a road marking as described above for the post-training or testing phase, respectively. Hereby, a system is provided that classifies an image comprising a road marking based on eigenvectors that are yet existing and that have been calculated according to an LDA of a concatenated gradient direction feature vector and a Local Binary Pattern histogram texture vector which are describing characteristics of the road marking.

These and other features, aspects and advantages of the present invention will become better understood with reference to the accompanying figures and the following description.
Fig. 1 shows a method for road marking recognition in a training phase according to an embodiment.
Fig. 2 shows a method for classifying a road marking according to an embodiment in a post-training or testing phase.
Fig. 3 shows a system for road marking recognition according to an embodiment in a training phase.
Fig. 4 shows a further system for classifying a road marking according to an embodiment in a post-training or testing phase.

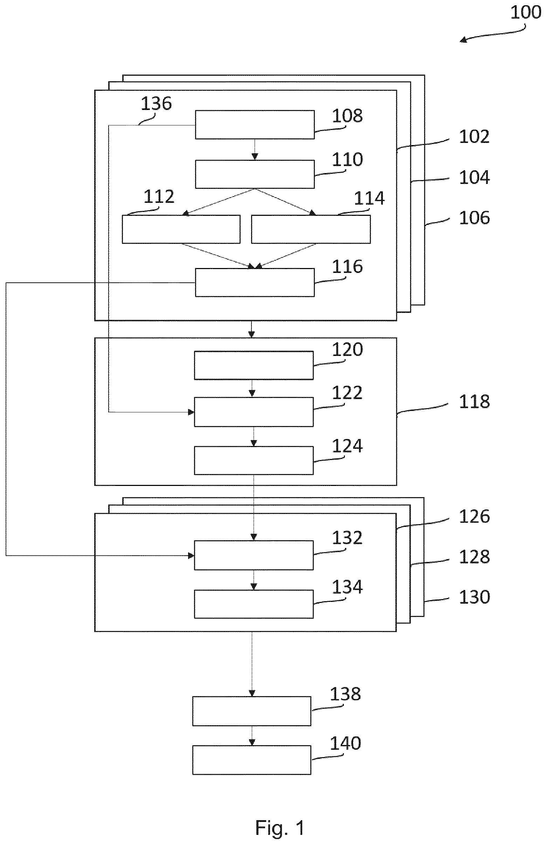

In the following, the method (100) for road marking recognition is illustrated at hand of Fig. 1 and a numerical example.

Referring to Fig. 1, in a training phase, a first image with known road marking is provided in 108, which is, e.g., taken by a camera mounted at a vehicle, comprising the road marking. In step 110, the image is cutout and the cutout is normalized, e.g., to zero mean unit variance of, e.g., the grey values, i.e., that the intensity values of image are distributes in range 0 to 1, and in size, so that the road marking fills in the cutout with a well-defined size. As an example, the normalized cutout has a size of 32x16 pixels. The cutout is processed to obtain the gradients that indicate a direction of maximum change, e.g., of the brightness, of a pixel to the neighbored pixels. The gradients of all pixels are determined and collected in step 112 in a gradient direction feature vector. The size of the vector in the numerical example is 1 x 512 where 512 is calculated from 32 x 16. Similarly, a Local Binary Pattern feature vector is created in step 114, where the cutout is divided into cells of, e.g., 4 x 4 pixels and for each pixel, the pixel is compared to its neighbor pixels. A counter is incremented if the center pixel's value is greater than the neighbor's value. In the numerical example, this is performed over 256 pixels so that the size of the Local Binary Pattern feature vector results in 1 x 256. The two feature vectors are concatenated in step 116 so that a concatenated feature vector of size 1 x 768 is obtained in the numerical example. The previous steps 108, 110, 112, 114, and 116 of the first image as illustrated by block 102 are repeated for a high number of images, e.g. 10000, indicated in Fig. 1 exemplarily with blocks 102, 104, 106. The concatenated feature vector of each of the sample images or blocks 102, 104, 106, respectively, are input in step 120 into the LDA 118. The LDA calculates the scatterings of groups or clusters in 122, in this case, the scatterings of the road marking features. Furthermore, the LDA calculates the eigenvector or discriminants, respectively, solving the eigenvalue problem that arises when determining the maximum of the ratio of the variances between the groups and inside a group. Each group corresponds to a road marking that in turn is labelled. The labelling is possible as the road markings are known a posteriori in the training phase. Thus, the labels are also input to the LDA in steps 136 and 122. The output of the LDA are eigenvectors that are stored in step 124. In the numerical example, if the number of different road markings is 100, then 99 discriminants or eigenvectors are available. All eigenvectors can be collected in a [768 x 99] eigenvector matrix with 768 rows and 99 columns. Now, the concatenated feature vector of step 116 of each of the known images is multiplied with the eigenvector matrix in 132. The result of this operation is a reduced feature vector 134 for each of the images. In the given numerical example the concatenated feature vector of size [1 x 768] multiplied with the eigenvector matrix [768 x 99] results in a reduced feature vector of size [1 x 99] . Finally, the feature vector can now be processed 138 using a support vector machine, extreme learning machines, or some other machine-learning algorithm to classify images so that a classifier model is obtained in step 140. Steps 132 and 134 are performed for each of the cutouts, which is indicated by the blocks 126, 128, and 130 in Fig. 1.

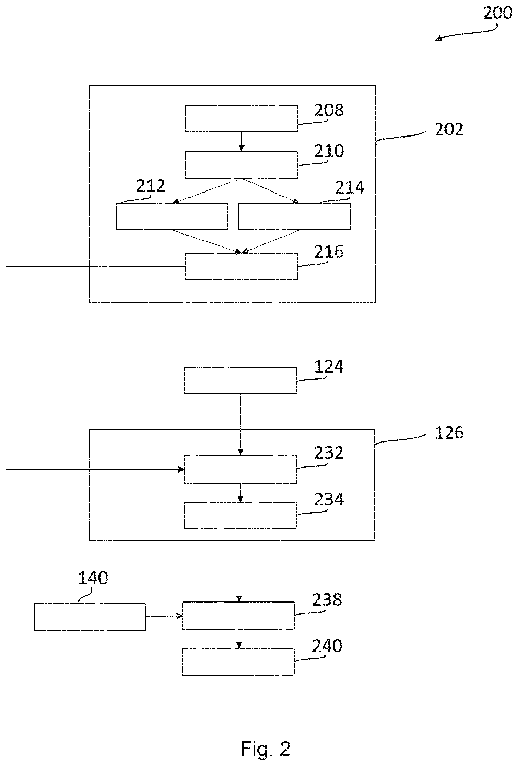

When the training phase is completed, for any image with an unknown road marking the steps 208, 210, 212, 214 and 216 in block 202 of Fig. 2 can be performed in the same way as the corresponding steps in 102 of Fig.1. In this way, the concatenated feature vector is obtained that can be converted into a reduced feature vector 234 by multiplying it in 132 with the yet determined and stored eigenvectors from 124. The final categorization 240 is reached by applying 238 the classifier model 140 from the training phase to the reduced feature vector 234 of the unknown road marking so that the sign type is obtained.

The proposed method increases the inter class variance significantly so that, e.g., varying directional arrows and textures can be differentiated. Using the Linear Discriminant Analysis allows for reducing the feature length or feature vector, respectively, so that the computation time for the classification is also reduced.

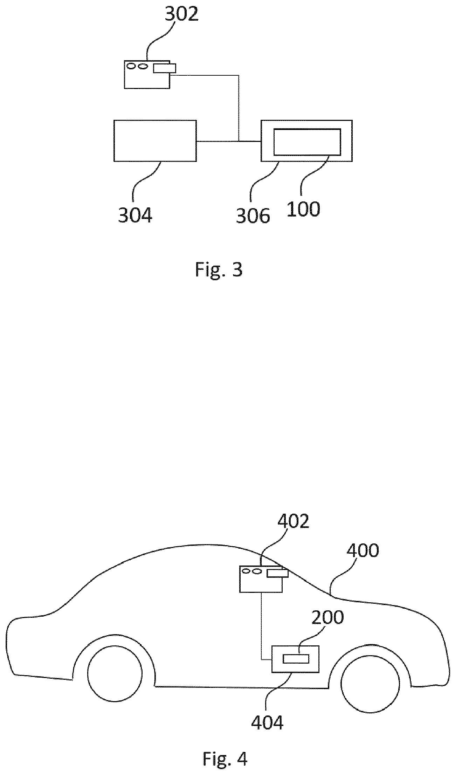

Fig. 3 shows a system according to an embodiment. The system 306 comprises a data storage 304 with images of known road markings or traffic signs. Alternatively, the images may be taken by a camera 302 and be stored in the camera 302 or transferred to the data storage 304. The stored images are then provided to the processing device 306 that is configured to process the method for road marking recognition 100 in a training phase.

Fig. 4 shows a further system and a vehicle 400 according to an embodiment. The system comprises a camera 402 and a processing device 404 that is configured to process the method for road marking recognition 100 in a post-training phase, e.g. in a test phase or in a application phase where it is, e.g., installed in a driver assistance module. During a test phase the system may be similar to that of Fig. 3 except that the system is configured to carry out method 200.

The systems shown in Fig. 3 and Fig. 4 or parts of them may be installed in a server outside the car. As an example, the images of camera 302 or 402, respectively, are sent over a wireless communication interface to the server that carries out method 100 or parts of method 100, and the result, e.g., an identifier of a recognized image, is sent back to the car for further processing. It is also possible that, e.g., the system is regularly updated wireless and the eigenvectors are sent wireless to the vehicle 400.

## Claims

1. Method (100) for road marking recognition, comprising the steps
- extracting (108, 110) cutouts of a plurality of road marking images,
- generating (112, 114, 116) a feature vector for each of the cutouts,
- applying (120, 122, 124) a Linear Discriminant Analysis over the feature vectors, and
- classifying the road marking images using a result of the Linear Discriminant Analysis (132, 134).

2. Method (100) according to claim 1, wherein the step of generating (112, 114, 116) a feature vector for each of the cutouts comprises:
- determining (112) a gradient direction feature vector,
- determining (114) a Local Binary Pattern histogram vector of the cutout,
- concatenating (116) the gradient direction vector and the Local Binary Pattern histogram vector to a concatenated feature vector; and applying (120, 122, 124) the Linear Discriminant Analysis over the concatenated feature vectors.

3. Method (100) according to claim 2,
wherein the step of applying (120, 122, 124) a Linear Discriminant Analysis over the concatenated feature vectors comprises
- determining (124) the eigenvectors to the eigenvalues calculated from the product of the inverse of a matrix comprising the scatterings within a category and a matrix comprising the scatterings between categories according to the Linear Discrimination Analysis.

4. Method (100) according to claim 3,
wherein the step of classifying road marking images comprises
- for each image multiplying (132) the concatenated feature vector with the eigenvectors, thereby generating (134) a reduced feature vector.

5. Method (100) according to one of the previous claims, wherein the step of classifying the road marking images further comprises:
- for each image applying a machine-learning algorithm in order to obtain a classifier model and classifying images according to the classifier model.

6. Method (200) for classifying a road marking, comprising the steps
- extracting (208, 210) a cutout of an image of a road marking,
- generating (212, 214) a feature vector (216),
- multiplying (232) the feature vector (216) with a pre-determined eigenvector (124) of a Linear Discriminant Analysis-Matrix to obtain a reduced feature vector (234), and
- classifying (140, 238, 240) a road marking using the reduced feature vector.

7. Method (200) according to claim 6, wherein the step of generating a feature vector of the cutout comprises:
- determining (212) a gradient direction vector,
- determining (214) a Local Binary Pattern histogram vector of the cutout,
- concatenating (216) the gradient direction vector and the Local Binary Pattern histogram vector to a concatenated feature vector.

8. Method (200) according to one of the claims 6 or 7,
wherein the step of classifying a road marking comprises applying a pre-determined classifier model.

9. System for road marking recognition, wherein the system comprises a processing device (306), and the processing device (306) is configured to carry out the method (100) according to one of claims 1 to 5.

10. System for road marking recognition, wherein the system comprises a processing device (404), and the processing device (404) is configured to carry out the method (200) according to one of claims 6 to 8.

11. Vehicle (400) comprising a system for road marking recognition, wherein the system is configured to carry out the method (200) according to one of claim 6 to 8.
